# FASCICULE DE BREVET EUROPEEN

(11) **EP 2 564 457 B1**
(45) Date de publication et mention de la délivrance du brevet: **08.11.2017**
(21) Numéro de dépôt: 11723526.7
(22) Date de dépôt: 28.04.2011
(51) Int. Cl.: H01M 6/50, H01M 10/42, H01M 8/00, H01M 8/0271, H01M 8/0297

(54) **PROCEDE DE TEST D'ETANCHEITE NON-DESTRUCTIF D'UN ELECTROLYTE DE CELLULE ELECTROCHIMIQUE**
ZERSTÖRUNGSFREIES TESTVERFAHREN ZUM TESTEN DER DICHTUNG EINES ELEKTROCHEMISCHEN ZELLELEKTROLYTS
NON-DESTRUCTIVE TEST METHOD FOR TESTING THE SEALING OF AN ELECTROCHEMICAL CELL ELECTROLYTE

(30) Priorité: 28.04.2010 FR 1053236
(43) Date de publication de la demande: 06.03.2013
(73) Titulaire: Commissariat à l'Énergie Atomique et aux Énergies Alternatives, 75015 Paris (FR)
(72) Inventeur: MOREL, Bertrand, F-38950 Saint Martin Le Vinoux (FR); POCACHARD, Jacques, F-38340 Voreppe (FR)
(74) Mandataire: Ilgart, Jean-Christophe
(86) Numéro de dépôt international: PCT/FR2011/050967
(87) Numéro de publication internationale: WO 2011/135263

(56) Documents cités:
- EP-A2- 0 827 226
- EP-A2- 1 522 838
- WO-A2-2004/027369
- US-A- 3 529 463
- US-A- 4 099 404
- US-A- 5 602 328

## Description

### DOMAINE TECHNIQUE

La présente invention se rapporte au domaine des cellules électrochimiques, du type comprenant un électrolyte enserré entre une anode et une cathode.

Ces cellules électrochimiques sont classiquement utilisées dans des piles à combustible, par exemple du type SOFC (de l'anglais « Solid Oxide Fuel Cell ») ou du type DMFC (de l'anglais « Direct Methanol Fuel Cell »), et dans des électrolyseurs, par exemple du type SOEC (de l'anglais « Solid Oxyde Electrolysis Cell).

### ETAT DE LA TECHNIQUE ANTERIEURE

L'électrolyte d'une cellule électrochimique doit être autant que possible étanche aux gaz/liquides combustible et comburant alimentant la cathode et l'anode, afin de limiter les réactions entre ceux-ci, réduisant les performances de la cellule.

Ainsi, l'étanchéité de l'électrolyte d'une cellule électrochimique est souvent testée avant son utilisation, afin de détecter l'éventuelle présence de défauts d'étanchéité sur l'électrolyte, qui, en fonctionnement, conduiraient à une baisse de rendement de la pile ou de l'électrolyseur. Habituellement, ces défauts prennent la forme de fissures apparues accidentellement lors de la fabrication de l'électrolyte.

De l'art antérieur, il est connu différents tests d'étanchéité qui ont en commun l'inconvénient de mettre en oeuvre des pressions gazeuses très élevées, qui sollicitent fortement la cellule testée, jusqu'à parfois même provoquer sa rupture. De plus, la mise en oeuvre de ces tests s'avère très souvent compliquée.

EP827226 et WO2004027369 décrivent un procédé de test d'étanchéité d'un électrolyte pour une pile à combustible.

### EXPOSÉ DE L'INVENTION

L'invention a donc pour but de remédier au moins partiellement aux inconvénients mentionnés ci-dessus, relatifs aux réalisations de l'art antérieur.

Pour ce faire, l'invention a pour objet un procédé de test d'étanchéité d'une pièce comprenant un électrolyte de cellule électrochimique, le procédé comprenant les étapes suivantes :
- réalisation d'une cavité fermée délimitée par une première surface extérieure de la pièce comprenant l'électrolyte à tester ;
- mise au contact d'une seconde surface extérieure de la pièce, opposée à la première surface, avec un premier fluide ;
- mise en circulation d'un second fluide, distinct du premier, à travers ladite cavité fermée, entre une entrée et une sortie de cette cavité ; et
- analyse du fluide extrait par ladite sortie de la cavité, afin de détecter l'éventuelle présence du premier fluide.
Ledit procédé étant mis en oeuvre avant la première utilisation de l'électrolyte et de sorte que ladite cavité fermée soit délimitée par un fond pourvu d'un évidement séparé du reste de la cavité par une grille , ladite entrée débouchant dans l'évidement et ladite sortie débouche au niveau de la grille. Avec ce principe, la présence du premier fluide dans le fluide extrait de la cavité fermée témoigne de son passage à travers l'électrolyte, et révèle donc une absence d'étanchéité de ce dernier, due par exemple à l'existence de défauts comme des fissures. L'invention permet également, en cas de détection d'un défaut d'étanchéité de l'électrolyte, de quantifier son niveau de fuite en fonction de la quantité de premier fluide détectée dans le mélange avec le second fluide.

Le procédé selon l'invention est avantageux en ce qu'il est facile à mettre en oeuvre, et ne nécessite pas l'emploi de pressions fluidiques importantes. Les risques de détérioration de la pièce comprenant l'électrolyte sont ainsi réduits à néant, ce qui permet de qualifier ce procédé de non-destructif.

La pièce testée peut être l'électrolyte seul, ou bien la cellule électrochimique comprenant cet électrolyte, c'est-à-dire ce dernier enserré par l'anode et la cathode.

Le procédé selon l'invention est mis en oeuvre après la fabrication et avant la première utilisation de l'électrolyte, mais peut également être réalisé une ou plusieurs fois au cours de la vie de cet électrolyte.

De préférence, les premier et second fluides sont des gaz. C'est en particulier le cas lorsque le combustible et le comburant de la cellule électrochimique associée sont eux aussi destinés à être gazeux. En revanche, si l'électrolyte testé est destiné à être intégré au sein d'une cellule dont le combustible et/ou le comburant est liquide, alors les premier et second fluides pourront être des liquides, ou bien des gaz.

De préférence, le premier gaz est du dioxygène contenu dans l'air ambiant au contact de la seconde surface extérieure de la pièce. Cela permet une mise en oeuvre extrêmement simple du procédé.

De préférence, le second gaz est du diazote, ou tout autre gaz neutre tel que de l'hélium.

Il est noté que les premier et second gaz peuvent l'un et/ou l'autre être un mélange de différents composants gazeux. Si au moins l'un des composants gazeux se retrouve dans les deux mélanges, pour savoir si le premier mélange a pénétré dans la cavité fermée avec le second mélange, il suffit alors par exemple de détecter la teneur dudit composant gazeux commun dans le fluide extrait de la cavité fermée, et de la comparer à la teneur initiale dudit composant gazeux commun dans le second mélange.

De préférence, la détection de l'éventuelle présence du premier fluide s'effectue à l'aide d'un analyseur de trace de ce premier fluide, qui peut être par exemple une sonde électrochimique. Cette technique permet en particulier une mesure précise de la quantité de dioxygène présente dans un mélange gazeux, et convient donc tout à fait lorsque le premier gaz est du dioxygène de l'air ambiant, et le second gaz du diazote.

En outre, il est de préférence déterminé, à partir de l'analyse du fluide extrait de ladite cavité fermée, un taux de fuite de la pièce testée, qui renseigne directement sur son niveau d'étanchéité.

De préférence, le second fluide est introduit dans la cavité fermée à une pression de l'ordre de quelques millibars. Cette faible pression n'engendre aucun risque de rupture de la pièce testée, qui n'est pas non plus fragilisée par la pression atmosphérique de l'air s'appliquant sur la première surface de cette pièce. Egalement, elle ne crée pas de flux inverse de gaz qui pourrait s'opposer à la diffusion passive du premier gaz au travers des défauts de la pièce à tester.

Il est indiqué que le procédé peut être mis en oeuvre à toute température réputée appropriée par l'homme du métier, en particulier à température ambiante.

Enfin, préférentiellement, ladite cavité fermée est délimitée par fond pourvu d'un évidement séparé du reste de la cavité par une grille, et ladite entrée débouche dans l'évidement et ladite sortie débouche au niveau de la grille.

D'autres avantages et caractéristiques de l'invention apparaîtront dans la description détaillée non limitative ci-dessous.

### BRÈVE DESCRIPTION DES DESSINS

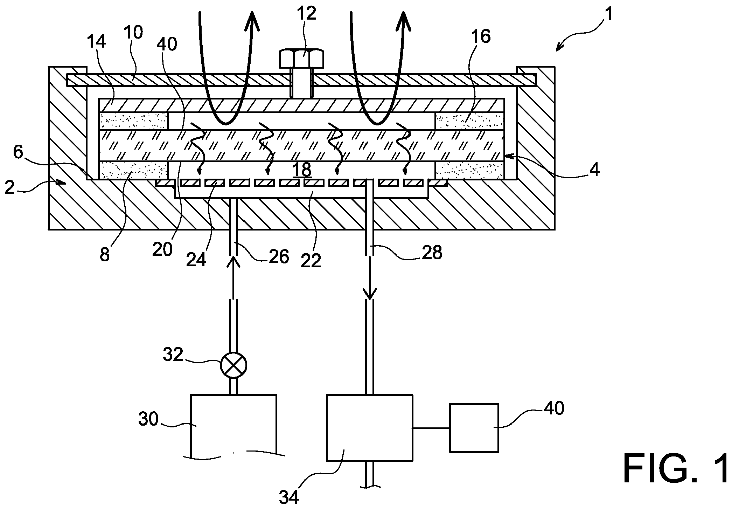

Cette description sera faite au regard de la figure unique représentant une vue schématique de l'installation permettant la mise en oeuvre d'un procédé de test d'étanchéité selon un mode de réalisation préféré de la présente invention.

### EXPOSÉ DÉTAILLÉ DE MODES DE RÉALISATION PRÉFÉRÉS

L'invention qui va être décrite ci-dessous, sous forme d'un mode de réalisation préféré, consiste à réaliser un procédé de test d'étanchéité non-destructif d'un électrolyte de cellule électrochimique, avant son empilement avec des dizaines, voire des centaines d'autres cellules au sein d'une pile à combustible ou d'un électrolyseur. De préférence, le procédé est réalisé sur une pièce constituant une cellule électrochimique SOFC/SOEC entière, c'est-à-dire comprenant l'électrolyte enserré entre l'anode et la cathode.

Sur ce type de cellule, par exemple de forme carrée d'environ 20 cm de côté, l'électrolyte présente une épaisseur faible de l'ordre de 5 à 10 µm. Alternativement, dans le cas d'une cellule à électrolyte support, l'épaisseur de l'électrolyte peut faire quelques dizaines de micromètres. Il est réalisé en zircone yttriée, tandis que l'anode est réalisée en céramique métallique où du nickel est dispersé, et la cathode est formée par une pérovskite.

Le but du procédé est de détecter, de manière simple et fiable, les éventuels défauts d'étanchéité de l'électrolyte, prenant par exemple la forme de problèmes de fabrication du type fissures susceptibles de laisser les gaz combustible et comburant traverser cet électrolyte.

Pour la mise en oeuvre du procédé, il est prévu une installation 1 montrée sur la figure unique, comprenant un bâti 2 en forme de réceptacle sensiblement parallélépipédique, ouvert vers le haut. La pièce à tester, c'est-à-dire la cellule électrochimique 4, est placée dans le réceptacle 2 à l'horizontale, parallèle au fond 6 de ce réceptacle. Un joint d'étanchéité 8 est interposé entre le fond 6 et la cellule 4, ce joint suivant le contour de la cellule. Typiquement, le joint 8 a une épaisseur de l'ordre de 2 mm, par exemple de 1 à 4 mm.

De plus, le réceptacle est recouvert en partie supérieure par un couvercle ajouré 10, par exemple en forme de croix, dont les extrémités sont retenues par les parois latérales du réceptacle. Ce couvercle 10 est pourvu de moyens de serrage comprenant ici une ou plusieurs vis verticales 12, en appui contre une plaque de serrage 14 également ajourée. Un autre joint d'étanchéité 16 est interposé entre la plaque de serrage 14 et la cellule 4, ce joint suivant aussi le contour de la cellule.

Le serrage de la vis 12 permet la mise en pression des deux joints 8, 16, entre la plaque 14 et le fond 6 du réceptacle. Typiquement, le serrage est de l'ordre de 10 N.m⁻¹, afin de garantir une étanchéité suffisante au niveau des joints, sans toutefois endommager la pièce dont l'épaisseur est faible, comprise entre quelques micromètres, par exemple 60 micromètres, et 500 micromètres, de préférence de l'ordre de 80 à 200 micromètres. La quantification du serrage permet sa reproductibilité et son application de façon homogène d'une pièce à la suivante.

Avec cette installation, une cavité fermée 18 est délimitée par le fond 6, le joint 8 et une première surface extérieure de la cellule 4, à savoir la surface inférieure 20 de la cellule électrochimique.

Le fond 6 peut être pourvu d'un évidement 22 séparé du reste de la cavité 18 par une grille 24 formant diffuseur, assurant une répartition et conséquemment un brassage et un renouvellement efficaces des gaz dans la cavité 18.

La cavité 18 est prévue pour être balayée par un gaz neutre, de préférence le diazote, circulant entre une entrée 26 et une sortie 28 pratiquées toutes les deux à travers le fond 6. Comme cela est visible sur la figure, l'entrée 26 débouche dans l'évidement 22, tandis que la sortie 28 débouche au niveau de la grille 24. En d'autres termes, la sortie 28, après avoir traversé le fond 6, prend la forme d'une canalisation enchâssée dans la grille 24.

De préférence, la cavité 18 est de faible volume, par exemple compris entre 100 et 600 cm³, de préférence de l'ordre de 200 à 300 cm³. L'entrée 26 est raccordée à des moyens d'alimentation en diazote 30, comme une bouteille de diazote gazeux, et par une vanne de régulation de débit et de pression 32. A titre d'exemple indicatif, la vanne est pilotée pour délivrer un débit de diazote gazeux de l'ordre de 100 ml/min, à une pression de l'ordre de 10 à 100 mbars, de préférence de 10 à 50 mbars. La sortie 28 est quant à elle reliée à un analyseur de trace 34, prenant de préférence la forme d'une sonde électrochimique, et dont la fonction sera explicitée ci-après.

Comme décrit précédemment, la sortie 28 est enchâssée dans la grille 24, donc au plus proche de la pièce 4 à tester, avec pour objectif de récupérer un gaz de balayage ayant la plus grande probabilité de contenir du dioxygène.

De l'autre côté de la cellule, celle-ci présente une seconde surface extérieure 40 opposée à la première, également dite surface supérieure. Bien entendu, les surfaces inférieure 20 et supérieure 40 se situent respectivement au niveau de l'anode et de la cathode de la cellule 4, ou inversement.

Cette seconde surface 40 est au contact de l'air ambiant, se trouvant donc à une température de l'ordre de 20 à 25°C et sous pression atmosphérique. Cet air ambiant traverse facilement le couvercle 10 et la plaque de serrage 14, comme cela a été représenté schématiquement par les flèches supérieures sur la figure. En particulier, la surface supérieure 40 se trouve au contact du dioxygène contenu dans l'air ambiant, dans une teneur de l'ordre de 21%. Ce dioxygène, dit premier gaz, remplit une fonction essentielle de « trace », puisque c'est sa présence dans la cavité fermée 18 qui va être recherchée, à l'aide de l'analyseur 34.

En effet, pour la mise en oeuvre du procédé, le balayage de diazote, dit second gaz, est réalisé à travers la cavité fermée 18, entre l'entrée 26 et la sortie 28. De préférence, on ménagera un temps de purge de quelques minutes, par exemple de 2 à 10 minutes dépendamment du débit appliqué, visant à éliminer tout oxygène résiduel dans la cavité 18 et au préalable de la mesure de fuite du premier gaz. L'analyseur 34 est capable de déterminer, de préférence en temps réel et en continu, une mesure de la quantité de dioxygène sortant de la cavité 18, en ppm, et ce de manière rapide, par exemple en quelques minutes seulement. Ainsi, en fonction de cette mesure, il est possible de savoir si du dioxygène de l'air ambiant a pénétré ou pas dans la cavité 18 en transitant par l'électrolyte de la cellule 4, suivant que le gaz analysé à la sortie de cette cavité est constitué par une mélange des premier et second gaz, ou par le second gaz de balayage uniquement. Dans le premier cas où du dioxygène est donc détecté par l'analyseur 34, cela traduit la présence d'un défaut d'étanchéité de l'électrolyte, qu'il est possible de quantifier par le biais d'un taux de fuite délivré par un convertisseur 40, à partir du nombre de ppm de dioxygène mesuré par l'analyseur 34.

A titre d'exemple illustratif, lors de la présence d'un défaut d'étanchéité sur l'électrolyte, même mineur, le taux de fuite détecté est de l'ordre de 4.10⁻³ mbar.l/s, ou plus. Cette valeur contraste avec celle obtenue lors d'une étanchéité parfaite de l'électrolyte, qui est de l'ordre de 6.10⁻⁶ mbar.l/s, résultant de la quantité initiale négligeable de dioxygène dans la bouteille de diazote 30.

Bien entendu, diverses modifications peuvent être apportées par l'homme du métier à l'invention qui vient d'être décrite, uniquement à titre d'exemples non limitatifs.

## Revendications

1. Procédé de test d'étanchéité d'une pièce (4) comprenant un électrolyte de cellule électrochimique, le procédé étant mis en oeuvre avant la première utilisation de l'électrolyte, et il comprend les étapes suivantes :
- réalisation d'une cavité fermée (18) délimitée par une première surface extérieure (20) de la pièce comprenant l'électrolyte à tester ;
- mise au contact d'une seconde surface extérieure (40) de la pièce, opposée à la première surface, avec un premier fluide ;
- mise en circulation d'un second fluide, distinct du premier, à travers ladite cavité fermée (18), entre une entrée (26) et une sortie (28) de cette cavité ; et
- analyse du fluide extrait par ladite sortie (28) de la cavité (18), afin de détecter l'éventuelle présence du premier fluide
ledit procédé étant mis en oeuvre de sorte que ladite cavité fermée (18) soit délimitée par un fond (6) pourvu d'un évidement (22) séparé du reste de la cavité (18) par une grille (24), ladite entrée (26) débouchant dans l'évidement (22) et ladite sortie (28) débouche au niveau de la grille (24).

2. Procédé selon la revendication 1, dans lequel les premier et second fluides sont des gaz.

3. Procédé selon la revendication 2, dans lequel le premier gaz est du dioxygène contenu dans l'air ambiant au contact de la seconde surface extérieure (20) de la pièce.

4. Procédé selon la revendication 2 ou la revendication 3, dans lequel le second gaz est du diazote.

5. Procédé selon l'une quelconque des revendications précédentes, dans lequel la détection de l'éventuelle présence du premier fluide s'effectue à l'aide d'un analyseur de trace (34) de ce premier fluide.

6. Procédé selon l'une quelconque des revendications précédentes, dans lequel il est déterminé, à partir de l'analyse du fluide extrait de ladite cavité fermée, un taux de fuite de la pièce testée.

7. Procédé selon l'une quelconque des revendications précédentes, dans lequel le second fluide est introduit dans la cavité fermée (18) à une pression de l'ordre de 10 à 50 mbars.

8. Procédé selon l'une quelconque des revendications précédentes, dans lequel ladite pièce (4) est l'électrolyte seul, ou bien la cellule électrochimique comprenant cet électrolyte.

## Patentansprüche

1. Verfahren zum Testen der Dichtigkeit eines Werkstücks (4), umfassend einen Elektrolyt einer elektrochemischen Zelle, wobei das Verfahren vor der ersten Verwendung des Elektrolyt durchgeführt wird und die folgenden Schritte umfasst:
- Realisieren eines geschlossenen Hohlraums (18), der durch eine erste Außenoberfläche (20) des zu testenden Werkstücks begrenzt ist, das den Elektrolyt umfasst;
- Inkontaktbringen einer zweiten Außenoberfläche (40) des Werkstücks entgegengesetzt zur ersten Oberfläche mit einem ersten Fluid;
- Inzirkulationversetzen eines von dem ersten verschiedenen zweiten Fluids durch den geschlossenen Hohlraum (18) zwischen einem Eingang (26) und einem Ausgang (28) dieses Hohlraums; und
- Analyse des durch den Ausgang (28) des Hohlraums (18) extrahierten Fluids, um die eventuelle Anwesenheit des ersten Fluids zu detektieren,
wobei das Verfahren derart durchgeführt wird, dass der geschlossene Hohlraum (18) durch einen Boden (6) begrenzt ist, der mit einer Aussparung (22) versehen ist, die vom Rest des Hohlraums (18) durch ein Gitter (24) getrennt ist, wobei der Eingang (26) in die Aussparung (22) mündet, und der Ausgang (28) im Bereich des Gitters (24) mündet.

2. Verfahren nach Anspruch 1, wobei das erste und das zweite Fluid Gase sind.

3. Verfahren nach Anspruch 2, wobei das erste Gas Disauerstoff ist, der in der Umgebungsluft in Kontakt mit der zweiten Außenoberfläche (20) des Werkstücks enthalten ist.

4. Verfahren nach Anspruch 2 oder Anspruch 3, wobei das zweite Gas Distickstoff ist.

5. Verfahren nach einem der vorhergehenden Ansprüche, wobei die Erfassung der eventuellen Anwesenheit des ersten Fluids mit Hilfe eines Spurenanalysators (34) für dieses erste Fluid erfolgt.

6. Verfahren nach einem der vorhergehenden Ansprüche, wobei ausgehend von der Analyse des aus dem geschlossenen Hohlraum extrahierten Fluids eine Leckrate des getesteten Werkstücks bestimmt wird.

7. Verfahren nach einem der vorhergehenden Ansprüche, wobei das zweite Fluid in den geschlossenen Hohlraum (18) mit einem Druck in der Größenordnung von 10 bis 50 mbar eingeführt wird.

8. Verfahren nach einem der vorhergehenden Ansprüche, wobei das Werkstück (4) der reine Elektrolyt ist, oder aber die elektrochemische Zelle, die diesen Elektrolyt enthält.

## Claims

1. A method for testing the seal of a part (4) comprising an electrolyte of an electrochemical cell, the method being implemented before the first use of said electrolyte, and it comprises the following steps:
- forming a closed cavity (18) delimited by a first outer surface (20) of the part comprising the electrolyte to be tested;
- contacting a second outer surface (40) of the part, opposite the first surface, with a first fluid;
- circulating a second fluid, separate from the first, through said closed cavity (18) between an inlet (26) and an outlet (28) of this cavity; and
- analysing the fluid extracted via said outlet (28) of the cavity (18), to detect the possible presence of the first fluid, said method being implemented such that said closed cavity (18) is delimited by a bottom (6) provided with a recess (22) separated from the remainder of the cavity (18) by a grid (24), said inlet (26) opens into the recess (22) and said outlet (28) leads to the grid (24).

2. The method according to claim 1 wherein the first and second fluids are gases.

3. The method according to claim 2 wherein the first gas is oxygen gas contained in ambient air in contact with the second outer surface (20) of the part.

4. The method according to claim 2 or claim 3 wherein the second gas is nitrogen gas.

5. The method according to any of the preceding claims wherein the detection of the possible presence of the first fluid is conducted using a trace analyser (34) of this first fluid.

6. The method according to any of the preceding claims wherein a leak rate of the tested part is determined on the basis of the analysis of the fluid extracted from said closed cavity.

7. The method according to any of the preceding claims wherein the second fluid enters the closed cavity (18) at a pressure of the order of 10 to 50 mbars.

8. The method according to any of the preceding claims wherein said part (4) is the electrolyte alone, or else the electrochemical cell containing this electrolyte.
